(19) Europäisches Patentamt

European Patent Office

Office européen des brevets

(11) **EP 0 995 393 B1**

(12) **EUROPEAN PATENT SPECIFICATION**

(45) Date of publication and mention
of the grant of the patent:
**25.08.2004 Bulletin 2004/35**

(51) Int Cl.⁷: **A47L 13/16**, D06M 23/00,
D06M 15/263, D06M 15/333

(21) Application number: **99121138.4**

(22) Date of filing: **22.10.1999**

(54) **Textile fabric with particle attracting finish**

Textile Warenbahn mit einer Partikelanziehenden Ausrüstung

Matériau textile traité avec un apprêt, attrayant les particules.

(84) Designated Contracting States:
**AT BE CH CY DE DK ES FI FR GB GR IE IT LI LU
MC NL PT SE**

(30) Priority: **23.10.1998 US 178396**

(43) Date of publication of application:
**26.04.2000 Bulletin 2000/17**

(73) Proprietor: **Milliken & Company
Spartanburg, County of Spartanburg,
South Carolina (US)**

(72) Inventors:
• **Morin, Brian G.
Greer, SC 29651 (US)**
• **McBride, Daniel T.
Chesnee, SC 29323 (US)**
• **Chambers, Loren W.
LaGrange, GA 30240 (US)**

(74) Representative: **HOFFMANN - EITLE
Patent- und Rechtsanwälte
Arabellastrasse 4
81925 München (DE)**

(56) References cited:
**EP-A- 0 060 076        WO-A-95/04851
US-A- 5 069 735        US-A- 5 271 995**

• **MARES T ET AL: "Soil-release and textile
properties of cotton/polyesterpoly(methacrylic
acid) copolymer fabrics" TEXTILE RESEARCH
JOURNAL, vol. 46, August 1976 (1976-08), pages
563-567, XP002134562**
• **PEPPERMAN A B ET AL: "Soil removal
properties of a low viscosity
carboxymethylcellulose in crosslinking
formulations" AMERICAN DYESTUFF
REPORTER, April 1971 (1971-04), pages 52-61,
XP002134563**

## Description

This invention relates to textile fabrics having a particle attracting finish applied thereto. The fabrics are referred to as wipers. The wipers find utility in cleaning surfaces, whenever it is desirable to minimize particulate contamination.

Wipers are utilized for a number of different cleaning applications, such as in cleanrooms, automotive painting rooms and other controlled environments. Each different application emphasizes certain standards that these types of wipers should attain. For example, wipers utilized in cleanrooms must meet stringent performance standards. These standards are related to sorbency and contamination, including maximum allowable particulate, unspecified extractable matter and individual ionic contaminants. The standards for particulate contaminant release are especially rigorous and various methods have been devised to meet them.

Wipers may be made from knitted, woven or non-woven textile fabrics. The fabric is cut into wipers, typically 22.9 cm by 22.9 cm (9 inch by 9 inch) squares. The wipers may remain unlaundered or may be washed in a cleanroom laundry, employing special surfactants and highly-filtered and purified water, to reduce the contamination present on the fabric. After washing, the wipers may be packaged dry in air-tight plastic bags, or pre-saturated with a suitable solvent before being packaged, and are ready for use.

Prior art developments in the field of wipers include reduction in particulate contaminants through the use of a specific yarn, such as "nylon bright" as disclosed in Paley et al., US 5,271,995, and reduction in loose fiber contamination by using a hot air jet to cut the fabric into pieces while simultaneously sealing the edges as disclosed in Reynolds US 5,069,735. Finishes to improve the sorbency of wipers made of hydrophillic fibers, such as polyester, have also been employed. Wiping cloths having a textile substrate and a porous polymer coating made from the "sulphonation products of cross-linked polymers containing sulphonated aromatic residues" are disclosed in GB 2 142 225 A.

Tack cloths are textile fabrics of relatively loose weave which have been chemically treated to give them a sticky or tacky character. They are used to remove dust from surfaces prior to applying a coating and for dusting in the home. Hansen, US 3,208,093, discloses a tack cloth having a plasticizer/vinyl polymer composition applied thereto in the amount of 10 to 16 parts polymer to about 11 parts of substrate. Bennet, US 3,658,578 discloses a fabric substrate impregnated with an amorphous polypropylene compound characterized by a m.w. of less than 10,000, to achieve a tacky finish.

## Summary of the Invention

The objects of the present invention are to provide: a textile wiper with a particle attracting finish; a textile wiper suitable for use in cleanrooms and other controlled environments where the wiper itself must be low in contaminants; a particle attracting wiper which will function in a wide range of applications - both dry and in conjunction with solvents; and a finish which is durable, yet exhibits little or no tack. In one embodiment, the wiper is laundered under conditions to leave a surfactant residue, which has been found to improve absorbency.

Accordingly, a textile fabric having a particle attracting, polymer finish is provided for use as a wiper. The wiper may be used dry or saturated with a desirable solvent. In one embodiment, the wipe is pre-saturated with a cleaning solvent and packaged in a resealable container.

The particle attracting potential of the present wiper has been characterized by a "particle attraction coefficient" measured by the following test:

A 22.9 cm x 22.9 cm (9" x 9") wiper is pre-wetted with water and placed in a beaker containing 400ml of water and 40 mg (0.01% by weight) of carbon black having an average particle size of 3 microns, as measured by a Microtrac UPA-150 analyzer, and obtained from Cabot Corporation (USA), identified as carbon black M-1300 (Monarch® 1300, a product of Cabot Corporation, USA). The wiper is stirred in the beaker using a magnetic stir bar for 30 seconds and removed. Excess water in the wiper is squeezed out, draining the water back into the beaker. The water in the beaker is then filtered through a 1.0 micron pore size glass fiber filter. The amount of carbon black particulate which was left in the beaker is calculated, and the amount of carbon black particulate absorbed by the wiper can be determined. The test is repeated for the identical fabric, without the particle attracting finish having been applied. The particle attraction coefficient (%) is calculated using the following formula:

$$\frac{\text{wt. of particulate (fabric + finish) - wt. of particulate (fabric only)}}{\text{wt. of particulate (fabric only)}} \times 100$$

For example, the wiper having the finish of the present invention absorbed 33 mg of carbon black, while the fabric without the finish absorbed only 13 mg. The particle attraction coefficient is 154%.

The particle attracting polymer may be selected from compounds having pendent groups which (i) exhibit hydrogen bonding, such as hydroxy, hydroxyalkyl and carboxy groups; (ii) have acid-base reactive groups, such as -COOH, $-NH_2$, $-SO_3$, and $-NO_3$. In one embodiment of the invention, the particle attracting polymer is water-soluble and selected from:

> (i) polysaccharides having a plurality of pendent groups selected from hydroxy, hydroxyalkyl and carboxy groups; and
> (ii) polymers formed by vinyl polymerization, having a plurality of pendent groups selected from hydroxy, hydroxyalkyl, carboxy, amino and alkylamino groups;

wherein the article has a particle attraction coefficient of 50% or greater for carbon black, and a particle count of particles greater than 0.5 microns of 75 million particles per square meter or less as measured by Biaxial Shake Test IEST-RP-CP-CC004.2.

## Detailed Description of the Invention

Without limiting the scope of the invention, the preferred embodiments and features are hereinafter set forth. Unless otherwise indicated, the following conditions apply: all parts and percentages are by weight; conditions are ambient, i.e. one atmosphere of pressure and 25° C; the term "average" means number-average; aliphatic hydrocarbons, including alkyl and alkylene radicals, comprise from 1 to 4 carbon atoms. Unless otherwise indicated, the particle attraction coefficient is measured using particles having an average size of approximately 3 microns.

The wipers of the present invention may be constructed from woven, knitted or non-woven fabric. Non-woven fabrics and their methods of manufacture are well known in the art. For example, non-woven fabrics may be wet laid, dry laid, spun bond, needle punched; with or without binders to stabilize them.

The fabric may be made from staple or continuous filament fibers, or yarns made from such fibers. Yarns having a wide variety of denier and filament count may be employed. By way of example, yarns having a denier to filament ratio of from 0.1 to 10, a denier of 15 to 250 with filament counts ranging from 10 to 250 may be employed. For certain cleaning applications, it is desirable to increase the abrasiveness of the fabric, and the fabric may incorporate filaments ranging in denier from 10 to 50.

The fiber may be selected from synthetic and natural fibers and blends thereof. For example, the fiber may be polyester, polyamide, polyolefin e.g. polyethylene, polypropylene and ethylene/propylene copolymer, acrylic, polyurethane, cellulosic, e.g. cotton, rayon and acetate, silk or wool, and blends thereof. Preferably, the fiber is polyester, polyamide or polyolefin. Most preferably, the wiper is woven or knitted from continuous filament, polyester yarn, for example, textured polyester yarn.

A wide range of fabric weights may be employed in the present invention. Typically, the fabrics used for cleanroom wipers have a weight of 33.9-542.6 g/m$^2$ (1 to 16 ounces per square yard), preferably 67.8 - 305.2 g/m$^2$ (2 to 9 ounces per square yard).

The fabric may be washed or scoured to remove spinning oils, dirt and other contamination prior to application of the particle attracting polymer. It is usually advantageous to heat set the fabric, either before or after application of the polymer, to provide dimensional stability. The fabric is preferably heat set at a temperature above what the yarns have previously experienced, after the initial spinning of the fiber. For example, polyester yarn may be heat set at a temperature of from 82.2-148.9°C (180° to 300° F). Preferably, the fabric lies flat when it is heat set.

Heat setting may advantageously be performed in a tenter frame oven, in which the fabric is held flat during heating and while it begins to cool. The temperature of the oven may be higher than the temperature actually experienced by the yarn, which will be a function of the oven or dryer temperature profile, length and speed of the fabric through the oven.

The particle attracting polymer finish or coating may be applied by any suitable method used to apply a coating in the form of a solution, dispersion, emulsion or a particulate to a fabric substrate. By way of example, the polymer may be applied by padding, wash wheel, spraying, nip roll, knife blade or in a jet dyeing apparatus. Preferably, the polymer is in the form of an aqueous solution.

The coat weight (solids) may be 0.01 wt.% or greater based on the weight of the fabric. Typically the coat weight is not greater than 6 wt.%. Preferably, the coat weight is from 0.02 to 3 wt.%, most preferably from 0.05 to 1 wt.%, based on the weight of the fabric. The particle attracting polymer is cured by a method appropriate to the polymer and the form in which it is applied (liquid or solid), and any residual liquor is evaporated. For example, if the polymer is applied in the form of a solution, dispersion or emulsion, the coated fabric may be dried and cured in a tenter oven.

The particle attracting polymer may be selected from polymers which exhibit an affinity for one or more of the following types of particulate matter: carbon black, aluminum, aluminum oxide, copper, copper oxide, ferrite, graphite, iron, iron oxide, manganese, manganese oxide, silicon, silicon dioxide, titanium, titanium dioxide, tungsten, tungsten dioxide, zinc and zinc oxide, preferably an affinity for one or more of the following types of particulate matter: carbon black, copper, copper oxide, silicon, silicon dioxide, tungsten and tungsten dioxide. The particle sizes of particular concern are those in the range of 0.5 to 20 microns.

The efficacy of a particular wiper in attracting and removing particulate contaminants, from a surface or liquor, is referred to herein as a "particle attraction coefficient." The test has been previously described. Briefly, the particle attraction coefficient is the ratio of the increased particle attracting characteristics of a polymer coated wiper, relative to an uncoated wiper, for a given particle type. Preferably, the coated wiper of the present invention has a particle attraction coefficient for 1-5 micron size particles of 50% or greater, most preferably, 100% or greater.

Examples of particle attracting polymers include the following:

(i) cellulose ethers, e.g. hydroxyalkylcelluloses, such as hydroxyethylcellulose and hydroxypropylcellulose; hydroxyalkylalkylcelluloses, such as hydroxyethylethylcellulose, hydroxybutylmethylcellulose, hydroxypropylmethylcellulose and hydroxyethylmethylcellulose; alkylcelluloses, such as methylcellulose and ethylcellulose; carboxyalkylcelluloses, such as sodium carboxymethylcellulose;

(ii) inorganic cellulose esters, e.g. cellulose nitrate;

(iii) chitosan; and

(iv) guar gums and hydroxy, hydroxyalkyl and carboxy substituted derivatives thereof; e.g. carboxymethylguar gum, carboxymethyl(hydroxypropyl)guar gum, hydroxyethylguar gum and hydroxypropylguar gum.

(v) starch and hydroxy, hydroxyalkyl and carboxy substituted derivatives thereof; e.g. hydroxyethylstarch and hydroxypropylstarch;

(vi) poly(vinyl alcohol) and vinyl alcohol copolymers, e.g. ethylene/vinyl alcohol copolymers and vinyl alcohol/methacrylate or methylmethacrylate copolymers;

(vii) poly(vinyl pyrrolidone);

(viii) poly(hydroxyalkyl acrylate) and poly(hydroxyalkyl methacrylate), e.g. poly(hydroxypropyl methacrylate), poly(hydroxypropyl acrylate); and

(ix) poly(alkyl acrylamide) and poly(alkyl acrylamide) copolymers, e.g. poly(isopropyl acrylamide) and isopropyl acrylamide/acrylic acid copolymer.

The class of suitable particle attracting polymers includes compounds having a broad range of molecular weights and solubilities in water. By way of example, polymers having an average molecular weight of from 1,000 to 2,000,000, preferably 25,000 to 1,000,000, most preferably 50,000 to 500,000 may be employed. Preferably, the polymer is water soluble, defined as a solubility of one part per 100 parts of water or greater, before the polymer is applied to the fabric and cured. Nevertheless, it is also desirable that the polymer, once applied to the fabric and cured, has sufficient durability to withstand laundering, such as in a cleanroom laundry. The particle attracting polymer may also be applied to the fabric with a binder, preferably in minor amounts, such as melamine formaldehyde resin binder in conjunction with chitosan.

It is believed that in most cases, the polymer forms a film on the fibers of the textile fabric. The objects of the invention may be achieved, however, whether the polymer forms a continuous film or is discontinuous.

In addition to the particle attracting polymer, other finishes may be applied to the textile fabric. For example, the textile fabric may be treated with a "soil release" finish to improve its wettability and washability, such as may be found in the following U.S. patents: Marco, US 4,131,550; Hauser, US 4,164,392; Marco, US 4,168,954; Marco, US 4,170,557; Marco, US 4,235,735; Kimbrell, US 4,329,389; Schuette, US 5,725,951. Examples of other compounds and compositions which may be applied to the textile fabric or used in conjunction with the particle attracting polymer include: plasticizers, antistatic agents, defoamers, anti-microbial or anti-fungal agents, lubricants, knitting oils and abrasives.

After the coated fabric is cured, the fabric is cut into nominal sizes for use as a cleanroom wiper, which are typically squares ranging from 10.2 cm by 10.2 cm (4 inches by 4 inches) to 61.0 cm by 61.0 cm (24 inches by 24 inches). Any geometry may be employed, however. The fabric is preferably, though not necessarily, cut using a technique which fuses the end of the yarn, thereby preventing unraveling and particle generation. Examples of suitable techniques may be found in Reynolds, US 5,069,735, and the references cited therein.

The wipers are typically packaged in a sealed container to keep them free from contamination.

For cleanroom applications, it is desirable to wash the fabric or wipers in a cleanroom laundry, which may be characterized as a laundry facility to remove and minimize contamination of the wipers, prior to packaging. The cleanroom laundry may employ special filters, surfactants, sequestrants, purified water, etc. to remove oils, reduce particle count and extract undesirable ion contaminates. The laundering process should not be overly aggressive, as the particle attracting finish may be removed. Depending on the equipment employed, it may be necessary to adjust the agitation, volume and duration of rinsing and the speed and duration of extraction. Examples of suitable equipment and description of cleanroom laundries may be found in Austin, Dr. Philip R., "Encyclopedia of Cleanrooms, Bio-Cleanrooms and Aseptic Areas", Contamination Control Seminars, Michigan (1995).

In one embodiment, a surfactant residue is left on the wiper from the laundering process, and has been found to improve absorbency. The surfactant or surface-active agent may be selected from cationic, anionic, nonionic and ampholytic surfactants. A comprehensive description of surfactants finding utility herein may be found in the Kirk-Othmer Encyclopedia of Chemical Technology, 4th edition, pp. 478-541 (1997). Preferably, the surfactant is selected from anionic and nonionic surfactants.

A surfactant residue in the range of 0.00001 wt.% (0.1 ppm) to 0.5 wt.%, preferably 0.00005 wt.% (0.5 ppm) to 0.1 wt.%, has been found to significantly improve the absorbance of the wiper, especially with regard to polar solvents, such as alcohols and water. High levels of residue on the wiper may act as a source of contamination and are to be avoided.

For many applications, such as wipers for use in automotive paint rooms, it is not necessary to wash the wipers in a cleanroom laundry prior to use. Accordingly, the wipers may be packaged in a sealed container, without having been laundered subsequent to having been coated.

The wipers may be presaturated with a desired solvent and sold in sealed dispensers, as is well known in the art. The terms saturated and presaturated are used in their broad sense, i.e. wet with solvent. Suitable solvents include water, organic solvents such as naphtha, and aqueous solutions of water miscible organic solvents, in particular solutions of alcohols, such as $C_1$-$C_8$ alcohols. Of particular interest are wipers presaturated with a solution of isopropanol and water, for example, aqueous solutions containing 1 to 99 wt.% isopropanol. The solvent composition may also contain a surfactant and/or other additives selected for their cleaning characteristics. By way of example, additional solvents and packages for pre-saturated wipers may be found in the following references: US 3,994,751; US 4,627,936; US 4,639, 327; US 4,998,984; US 5,145,091; US 5,344,007 and JP 6[1994]-48475. Alternatively, the wipers may be sealed in air tight packages while dry.

Standards for Cleanroom Wipers

Among the standards which may be imposed on cleanroom wipers include performance criteria related to sorbency and contaminates. One standard for evaluating cleanroom wipers is the Institute of Environmental Sciences & Technology (IEST), Contamination Control Division Recommended Practice 004.2, which may be cited as IEST-RP-CC004.2, "Evaluating Wiping Materials Used in Cleanrooms and Other Controlled Environments".

Section 7 of Recommended Practice 004.2 sets forth some of the tests utilized for determining the capacity and rate sorption of cleanroom wipers. The capacity tests is performed by saturating a known area of wiper with a selected liquid and then calculating the volume sorbed per unit mass and per unit area of wiper (IEST-RP-CC004.2 §7.1). The sorbency per unit mass is referred to as the "intrinsic sorbency" and is the volume of liquid in milliliters sorbed per unit of mass of wiper in grams. The "extrinsic sorbency" is the volume of liquid in milliliters sorbed per unit area of wiper in square meters.

The rate of sorption of a cleanroom wiper is measured by allowing a drop of water to fall from a fixed height onto the surface of a wiper. The time required for the disappearance of specular reflection from the drop is measured and recorded as the sorption rate (IEST-RP-CC004.2 §7.2).

The primary test for contamination associated with cleanroom wipers are those measuring particles, unspecified extractable matter, and individual ionic constituents. The number of particles released during wetting and mechanical stress can be measured in the Biaxial Shake Test (IEST-RP-CC004.2 §5.2). Briefly, the wipers are placed in a jar of water and shaken. Aliquots are removed from the shaker and the number of particles is counted, typically those in the size range of 0.1 microns and larger are specified. The number of particles greater than a given particle size are reported in millions per square meter of fabric.

The amount of extractable contamination associated with a cleanroom wiper is determined by extracting the wiper with a solvent, such as water, isopropyl alcohol or acetone, evaporating the solvent and weighing the non-volatile residue (IEST-RP-CC004.2 §6.1). The quantity of extracted matter may be reported as mass extracted per mass of wiper or mass extracted per unit area of wiper.

The organic and inorganic non-volatile residue may be further analyzed, when it is desirable to know how much of a particular species is present. Typically, the non-volatile residue is tested for various inorganic, anionic or cationic constituents, for example Al, Ca, Cl, F, Li, Mg, K, Na and Zn (IEST-RP-CC004.2 §6.2).

The invention may be further understood by reference to the following examples.

Example 1: Wipers Coated With Hydroxypropylcellulose

Wipers measuring 22.9 cm x 22.9 cm 9" x 9" and weighing about 135.6 $g/m^2$ (4 $oz/yd^2$), were knitted from continuous filament polyester yarns (70 denier/34 filament and 70 denier/100 filament yarns in a 3:1 ratio, respectively). The wipers were wet in a 0.1% aqueous solution of hydroxypropylcellulose (average m.w. - 370,000), with the excess squeezed out by hand, to achieve an add-on of 0.2 wt.% polymer. The wipers were dried in a forced air oven at 176.7°C (350 degrees F) for 6 minutes. Coated wipers were tested for particle attraction to various particles using the particle attraction test described above, and compared to uncoated wipers. The results are shown in the table below.

| Particle | Particle Size ($\mu$m) | Uncoated Pickup (mg) | Coated Pickup (mg) |
|---|---|---|---|
| Carbon Black | 3 | 13 | 33 |
| Aluminum Oxide | 0.3 | 8 | 19 |
| Manganese Oxide | 0.4 | 10 | 17 |
| Titanium Dioxide | 1.3 | 4 | 14 |
| Zinc Oxide | 2.2 | 8 | 25 |
| Aluminum | 2.7 | 8 | 18 |
| Graphite | 3.4 | 23 | 32 |
| Iron | 1.1 | 9 | 26 |
| Ferric Oxide | 3.1 | 6 | 18 |
| Zinc | 1.2 | 17 | 22 |
| Ferrite | 1.3 | 8 | 13 |
| Silicon Dioxide | 1.8 | 12 | 28 |

Example 2: Wipers Coated in Washer With Hydroxypropylcellulose

Three-Hundred wipers of 22.9 cm by 22.9 cm (9" x 9"), made from the fabric described in Example 1, were wet with 0.6% aqueous solution of hydroxypropylcellulose (average m.w. -110,000), with the excess squeezed out by hand, to achieve an add-on of 1.2 wt.% polymer. The wipers were dried in a conventional laundry dryer for 40 minutes. Some of the wipers were tested for attraction to carbon black particles and found on average to pick up 24 mg. Other wipers were washed in a pilot scale 16 kg (35 lb. washer) cleanroom laundry using a standard procedure, tested for particle release using the Biaxial Shake Test, and found to have 13 million particles/sq. m. greater than 0.5 microns.

Example 3: Wipers Jet Coated With Hydroxypropylcellulose

Ten wipers of 22.9 cm by 22.9 cm (9" x 9"), made from the fabric described in Example 1, were placed in a Werner Mathis CH-8155 laboratory jet in a 0.1% aqueous solution of hydroxypropylcellulose (mol. wt. -400,000) and jetted at 70 degrees C for 20 minutes, to achieve an add-on of 0.2 wt.% polymer. The wipers were dried in a forced air oven at 176.7°C (350 degrees F) for 6 minutes, then tested for particle attraction to carbon black, picking up 30 mg.

Examples 4-13: Wipers Hand Coated With Other Polymers

Wipers, made from the fabric described in Example 1, were wet in an aqueous solution of the polymer (solids noted in table), with the excess squeezed out by hand, to achieve an add-on of about 0.2 wt.% polymer. The wipers were dried in a forced air oven at 176.7°C (350 degrees F) for 6 minutes. Coated wipers were tested for particle attraction to carbon black using the particle attraction test described above, and compared to uncoated wipers. The results are shown in the table below.

| Polymer | Carbon Black Pickup (mg) |
|---|---|
| None (comparative) | 10 |
| Sodium carboxymethylcellulose (0.1%) | 26 |
| poly(carboxyilic acid) (0.1%) | 27 |
| Hydroxypropylcellulose (0.1%) | 21 |
| poly(vinyl pyrrolidone) (0.05%) | 26 |
| Chitosan (0.5%) + melamine formaldehyde resin (0.005%) | 27 |
| poly(acrylic acid) (0.1%) | 28 |
| Hydroxypropylmethylcellulose (0.1%) | 28 |
| Methylcellulose (0.1%) | 29 |
| Isopropyl amine/methacrylic acid copolymer (0.1%) | 36 |

Examples 14-15

The following example demonstrates the improvement in absorbency realized when a surfactant residue is left on the wiper.

A fabric as described in Example 1 was pad coated with a 2.4% poly(vinyl alcohol) aqueous solution, vacuumed over a vacuum slot and dried in a tenter frame oven at 121.1°C (250° F) to achieve an add-on of 2.1 wt.% polymer. The fabric was laser cut into 22.9 cm by 22.9 cm (9" x 9") wipers and laundered in a conventional cleanroom washer and dryer.

The rate of sorption of the wipers was measured according to IEST-RP-CC004.2 §7.2 (the time required for the disappearance of specular reflection from a drop of water on the surface of the wiper), and found to be 7 seconds.

The wipers were placed back in the cleanroom washer and run through an abbreviated wash cycle in which a commercial detergent, comprised of nonylphenol ethoxylate, was added in the penultimate rinse cycle. The wipers were dried in a cleanroom dryer to achieve an add-on of about 1 ppm surfactant, in addition to the previously applied polymer coating. The rate of sorption was tested as above and found to be 0.2 seconds.

The foregoing examples demonstrate the efficacy of the wiper having a particle attracting finish in absorbing and retaining particulates, especially those in the target range of 0.5 to 20 microns. The wipers attract particulate in both a wet and dry environment, especially in an aqueous environment, such as might be encountered when using a wiper saturated with a solvent. The wipers are not tacky, and the polymer coating does not leave a residue when the wiper is used to clean a surface, wet or dry.

Additionally, by following the teachings of the present invention, it is possible to manufacture wipers which not only have superior cleaning characteristics, but also meet the requirements for Class 1, Class 10, Class 100, Class 1,000, Class 10,000 and Class 100,000 cleanrooms as defined in Federal Standard 209 E. In particular, the wipers meet one or more of the following objectives: to reduce particulate contamination of particles greater than 0.5 microns to a level of less than 75 million/meters$^2$, preferably less than 30 million/meters$^2$, as measured by the Biaxial Shake Test (IEST-RP-CC004.2 §5.2); to reduce particle contamination of particles greater than 5 microns to a level of less than 1 million/m$^2$, preferably less than 300,000/m$^2$, most preferably less than 150,000/m$^2$, as measured by the Biaxial Shake Test (IEST-RP-CC004.2 §5.2); to reduce non-volatile residues with water extraction to less than .005 grams/meters$^2$, and even less than .003 grams/meters$^2$ as measured by short term extraction (IEST-RP-CC004.2 §6.1.2); and to achieve absorbance capacities of 3.5 milliliters/meters$^2$ or greater, and even 4.0 milliliters/meters$^2$ or greater (IEST-RP-CC004.2 §7.1).

A further advantage of the wipers of the present invention is that the particle attracting polymer is believed to reduce particle release from the wiper, such as low molecular weight polyester, which migrates to the surface of polyester fiber. Without being bound to a particular theory, it is believed that the particle attracting polymer may work as a barrier to trap particulate contaminants from being released by the wiper.

The cleanroom wipers find utility in virtually any environment where a low contaminate, high absorbance wiping cloth is desired, such as in semiconductor, optical, food packaging and pharmaceutical cleanrooms, and in preparation of surfaces for painting or other coating.

## Claims

1. An article comprising a textile fabric and a particle attracting polymer coated on the fabric, the article having a particle attraction coefficient of 50% or greater for carbon black particles, and a particle count of particles greater than 0.5 microns of 75 million particles per square meter or less as measured by Biaxial Shake Test according to IES-RP-CC004.2, §5.2.

2. The article of claim 1 having 0.01 to 6 weight% of polymer relative to the weight of the fabric.

3. The article of claim 1 or 2 wherein the fabric is woven or knitted, polyester fiber and has a weight of from 2 to 9 ounces per square yard (67,8-305,2 g/m$^2$).

4. The article of any of claims 1 to 3 having a particle attraction coefficient of 100% or greater for carbon black.

5. The article of any of claims 1 to 4 wherein the polymer has a number average molecular weight of 25,000 to 1,000,000 and the polymer has a plurality of pendent groups selected from hydroxy, hydroxyalkyl and carboxy groups.

6. The article of any of claims 1 to 5 wherein the article is saturated with a solvent and packaged in a sealed container.

7. The article of any of claims 1 to 6 having a particle count of particles greater than 0.5 microns of 30 million particles per square meter or less and an extrinsic sorbency of 3.5 milliliters/meter squared or greater.

**8.** The article according to claim 1 wherein the polymer is a water-soluble polymer selected from

(i) polysaccharides having a plurality of pendent groups selected from hydroxy, hydroxyalkyl and carboxy groups; and
(ii) polymers formed by vinyl polymerization, having a plurality of pendent groups selected from hydroxy, hydroxyalkyl, carboxy, amino and alkylamino groups.

**9.** The article of claim 8 wherein the polymer has a number average molecular weight of 25,000 to 1,000,000.

**10.** The article of claim 9 having 0.02 to 3 weight% of polymer relative to the weight of the fabric.

**11.** The article of claim 9 wherein the polymer is selected from cellulose ethers, poly(vinyl alcohol) and vinyl alcohol copolymers.

**12.** The article of claim 11 wherein the article is saturated with a solvent and packaged in a sealed container.

**13.** The article of claim 11 having a particle attraction coefficient of 100% or greater for carbon black and a particle count of particles greater than 0.5 microns of 30 million particles per square meter or less.

**14.** A wiper comprising a textile fabric and a particle attracting polymer coated on the fabric, wherein the polymer is selected from (i) cellulose ethers; (ii) inorganic cellulose esters; (iii) chitosan; (iv) guar gums and hydroxy, hydroxyalkyl and carboxy substituted derivatives thereof; (v) starch and hydroxy, hydroxyalkyl and carboxy substituted derivatives thereof; (vi) poly(vinyl alcohol) and vinyl alcohol copolymers; (vii) poly(vinyl pyrrolidone); (viii) poly(hydroxyalkyl acrylate) and poly(hydroxyalkyl methacrylate) and (ix) poly(alkyl acrylamide) and poly(alkyl acrylamide) copolymers;
wherein the article has a particle count of particles greater than 0.5 microns of 75 million particles per square meter or less as measured by Biaxial Shake Test IES-RP-CC004.2.

**15.** The wiper of claim 14 having 0.05 to 1 weight% of polymer relative to the weight of the fabric.

**16.** The wiper of claim 14 having a particle attraction ratio of 100% or greater for carbon black.

**17.** The wiper of claim 16 wherein the fabric is woven or knitted, polyester fiber and has a weight of from 2 to 9 ounces per square yard (67,8-305,2 g/m$^2$).

**18.** The wiper of claim 14, wherein the polymer is selected from cellulose ethers, poly(vinyl alcohol) and vinyl alcohol copolymers.

**19.** The wiper of claim 18 having from 0.02 to 3 weight% of polymer relative to the weight of the fabric and a particle attraction coefficient of 50% or greater for carbon black.

**20.** The wiper of claim 19 having a particle count of particles greater than 0.5 microns of 30 million particles per square meter or less and an extrinsic sorbency of 3.5 milliliters/meter squared or greater.

**21.** The wiper of claim 14 wherein the article further comprises a surfactant residue in the range of 0.1 ppm to 0.5 wt.%.

**22.** The article of claim 1 wherein the article further comprises a surfactant residue selected from anionic and nonionic surfactants, in the range of 0.5 ppm to 0.1 wt.%.

**23.** The article of claim 8, wherein the article further comprises a surfactant residue in the range of 0.1 ppm to 0.5 wt.%.

**24.** An article comprising a textile fabric and a particle attracting polymer coated on the fabric, the article having a particle attraction coefficient of 50% or greater for carbon black, particles, and a particle count of particles greater than 5 microns of 1 million particles per square meter or less as measured by Biaxial Shake Test IES-RP-CC004.2, and the article is packaged in a sealed container and has not been laundered subsequent to the particle attracting polymer having been coated on the fabric.

**25.** The article of claim 24 having a particle attraction coefficient of 100% or greater for carbon black.

**26.** The article of claim 24 wherein the polymer has a number average molecular weight of 25,000 to 1,000,000 and the polymer has a plurality of pendent groups selected from hydroxy, hydroxyalkyl and carboxy groups.

**27.** The article of claim 24 wherein the article has a particle count of particles greater than 5 microns of 300,000 particles per square meter or less.

**28.** The article of claim 27 wherein the particle attracting polymer is water-soluble and is selected from:

(i) polysaccharides having a plurality of pendent groups selected from hydroxy, hydroxyalkyl and carboxy groups; and
(ii) polymers formed by vinyl polymerization, having a plurality of pendent groups selected from hydroxy, hydroxyalkyl, carboxy, amino and alkylamino groups.

**29.** The article of claim 24 wherein the article has a particle count of particles greater than 5 microns of 150,000 particles per square meter or less.

**30.** The article of claim 29 wherein the particle attracting polymer is selected from (i) cellulose ethers; (ii) inorganic cellulose esters; (iii) chitosan; (iv) guar gums and hydroxy, hydroxyalkyl and carboxy substituted derivatives thereof; (v) starch and hydroxy, hydroxyalkyl and carboxy substituted derivatives thereof; (vi) poly(vinyl alcohol) and vinyl alcohol copolymers; (vii) poly(vinyl pyrrolidone); (viii) poly(hydroxyalkyl acrylate) and poly(hydroxyalkyl methacrylate) and (ix) poly(alkyl acrylamide) and poly(alkyl acrylamide) copolymers.

**31.** The article of claim 24 wherein the article is saturated with a solvent and packaged in a sealed container.

**Patentansprüche**

**1.** Artikel, der einen Textilstoff und ein auf den Stoff aufgeschichtetes teilchenanziehendes Polymer umfasst, der Artikel weist einen Teilchenanziehungskoeffizienten von 50 % oder mehr für Russteilchen und eine Teilchenzählung grösser 0,5 Mikron von 75 Millionen Teilchen/m$^2$ oder weniger auf, gemessen nach dem biaxialen Schütteltest gemäss IES-RP-CC004.2, § 5.2.

**2.** Artikel gemäss Anspruch 1, der 0,01-6 Gew.% Polymer aufweist, bezogen auf das Gewicht des Stoffes.

**3.** Artikel gemäss Anspruch 1 oder 2, worin der Stoff aus gewebter oder gestrickter Polyesterfaser ist und ein Gewicht von 2-9 oz/yd$^2$ (67,8-305,2 g/m$^2$) aufweist.

**4.** Artikel gemäss mindestens einem der Ansprüche 1 bis 3, der einen Teilchenanziehungskoeffizienten von 100 % oder mehr für Russ besitzt.

**5.** Artikel gemäss mindestens einem der Ansprüche 1 bis 4, worin das Polymer ein Zahlendurchschnitts-Molekulargewicht von 25.000-1.000.000 aufweist und das Polymer eine Vielzahl anhängender Gruppen aufweist, ausgewählt aus Hydroxy-, Hydroxyalkyl- und Carboxygruppen.

**6.** Artikel gemäss mindestens einem der Ansprüche 1 bis 5, worin der Artikel mit einem Lösungsmittel gesättigt und in einem verschlossenen Behälter verpackt ist.

**7.** Artikel gemäss mindestens einem der Ansprüche 1 bis 6, der eine Teilchenzählung für Teilchen grösser 0,5 Mikron von 30 Millionen Teilchen/m$^2$ oder weniger und eine extrinsische Sorbens von 3,5 ml/m$^2$ oder mehr aufweist.

**8.** Artikel gemäss Anspruch 1, worin das Polymer ein wasserlösliches Polymer ist, ausgewählt aus:

(i) Polysacchariden mit einer Vielzahl von anhängenden Gruppen, ausgewählt aus Hydroxy-, Hydroxyalkyl- und Carboxygruppen, und

(ii) Polymeren, die gebildet werden durch Vinylpolymerisation, und die eine Vielzahl von anhängenden Gruppen aufweisen, ausgewählt aus Hydroxy-, Hydroxyalkyl-, Carboxy-, Amino- und Alkylaminogruppen.

9. Artikel gemäss Anspruch 8, worin das Polymer ein Zahlendurchschnitts-Molekulargewicht von 25.000-1.000.000 aufweist.

10. Artikel gemäss Anspruch 9, der 0,02-3 Gew.% Polymer aufweist, bezogen auf das Gewicht des Stoffes.

11. Artikel gemäss Anspruch 9, worin das Polymer ausgewählt ist aus Celluloseethern, Polyvinylalkohol und Vinylalkohol-Copolymeren.

12. Artikel gemäss Anspruch 11, worin der Artikel mit einem Lösungsmittel gesättigt und in einem verschlossenen Behälter verpackt ist.

13. Artikel gemäss Anspruch 11, der einen Teilchenanziehungskoeffizienten von 100 % oder mehr für Russ und eine Teilchenzählung für Teilchen grösser 0,5 Mikron von 30 Millionen Teilchen/m$^2$ oder weniger aufweist.

14. Wischtuch, das einen Textilstoff und ein auf den Stoff aufgeschichtetes, teilchenanziehendes Polymer umfasst, worin das Polymer ausgewählt ist aus (i) Celluloseethern; (ii) anorganischen Celluloseestern; (iii) Chitosan; (iv) Guargummis und hydroxy-, hydroxyalkyl- und carboxysubstituierten Derivaten davon; (v) Stärke und hydroxy-, hydroxyalkyl- und carboxysubstituierten Derivaten davon; (vi) Poly(vinylalkohol) und Vinylalkohol-Copolymeren; (vii) Poly(vinylpyrrolidon); (viii) Poly(hydroxyalkylacrylat) und Poly(hydroxyalkylmethacrylat) und (ix) Poly(alkylacrylamid) und Poly(alkylacrylamid)-Copolymeren;
worin der Artikel eine Teilchenzählung für Teilchen grösser 0,5 Mikron von 75 Millionen Teilchen/m$^2$ oder weniger, gemessen nach dem biaxialen Schütteltest IES-RP-CC004.2, aufweist.

15. Wischtuch gemäss Anspruch 14, das 0,05-1 Gew.% Polymer aufweist, bezogen auf das Gewicht des Stoffes.

16. Wischtuch gemäss Anspruch 14, mit einem Teilchenanziehungskoeffizienten für Russ von 100 % oder mehr.

17. Wischtuch gemäss Anspruch 16, worin der Stoff aus gewebter oder gestrickter Polyesterfaser ist und ein Gewicht von 2-9 oz/yd$^2$ (67,8-305,2 g/m$^2$) aufweist.

18. Wischtuch gemäss Anspruch 14, worin das Polymer ausgewählt ist aus Celluloseethern, Polyvinylalkohol und Vinylalkohol-Copolymeren.

19. Wischtuch gemäss Anspruch 18, das 0,02-3 Gew.% Polymer, bezogen auf das Gewicht des Stoffes, und einen Teilchenanziehungskoeffizienten von 50 % oder mehr für Russ aufweist.

20. Wischtuch gemäss Anspruch 19, das eine Teilchenzählung für Teilchen grösser 0,5 Mikron von 30 Millionen Teilchen/m$^2$ oder weniger und eine extrinsische Sorbens von 3,5 ml/m$^2$ oder mehr aufweist.

21. Wischtuch gemäss Anspruch 14, worin der Artikel ferner einen Tensidrückstand im Bereich von 0,1 ppm bis 0,5 Gew.% umfasst.

22. Artikel gemäss Anspruch 1, worin der Artikel ferner einen Tensidrückstand umfasst, ausgewählt aus anionischen und nicht-ionischen Tensiden, im Bereich von 0,5 ppm bis 0,1 Gew.%.

23. Artikel gemäss Anspruch 8, worin der Artikel ferner einen Tensidrückstand im Bereich von 0,1 ppm bis 0,5 Gew.% umfasst.

24. Artikel, der einen Textilstoff und ein auf den Stoff aufgeschichtetes teilchenanziehendes Polymer umfasst, der Artikel weist einen Teilchenanziehungskoeffizienten von 50 % oder mehr für Russteilchen und eine Teilchenzählung grösser 5 Mikron von 1 Million Teilchen/m$^2$ oder weniger auf, gemessen nach dem biaxialen Schütteltest gemäss IES-RP-CC004.2, und der Artikel ist in einem verschlossenen Behälter verpackt und wurde im Anschluss an das Beschichten des Stoffes mit dem teilchenanziehenden Polymer nicht gewaschen.

25. Artikel gemäss Anspruch 24, der einen Teilchenanziehungskoeffizienten für Russ von 100 % oder mehr aufweist.

26. Artikel gemäss Anspruch 24, worin das Polymer ein Zahlendurchschnitts-Molekulargewicht von 25.000-1.000.000 hat und das Polymer eine Vielzahl anhängender Gruppen aufweist, ausgewählt aus Hydroxy-, Hydroxyalkyl- und Carboxygruppen.

**27.** Artikel gemäss Anspruch 24, worin der Artikel eine Teilchenzählung für Teilchen grösser 5 Mikron von 300.000 Teilchen/m$^2$ oder weniger aufweist.

**28.** Artikel gemäss Anspruch 27, worin das teilchenanziehende Polymer wasserlöslich ist und ausgewählt ist aus

(i) Polysacchariden mit einer Vielzahl von anhängenden Gruppen, ausgewählt aus Hydroxy-, Hydroxyalkyl- und Carboxygruppen, und
(ii) Polymeren, die gebildet werden durch Vinylpolymerisation, und die eine Vielzahl von anhängenden Gruppen aufweisen, ausgewählt aus Hydroxy-, Hydroxyalkyl-, Carboxy-, Amino- und Alkylaminogruppen.

**29.** Artikel gemäss Anspruch 24, worin der Artikel eine Teilchenzählung für Teilchen grösser 5 Mikron von 150.000 Teilchen/m$^2$ oder weniger aufweist.

**30.** Artikel gemäss Anspruch 29, worin das teilchenanziehende Polymer ausgewählt ist aus (i) Celluloseethern; (ii) anorganischen Celluloseestern; (iii) Chitosan; (iv) Guargummis und hydroxy-, hydroxyalkyl- und carboxysubstituierten Derivaten davon; (v) Stärke und hydroxy-, hydroxyalkyl- und carboxysubstituierten Derivaten davon; (vi) Poly(vinylalkohol) und Vinylalkohol-Copolymeren; (vii) Poly(vinylpyrrolidon); (viii) Poly(hydroxyalkylacrylat) und Poly(hydroxyalkylmethacrylat) und (ix) Poly(alkylacrylamid) und Poly(alkylacrylamid)-Copolymeren.

**31.** Artikel gemäss Anspruch 24, worin der Artikel mit einem Lösungsmittel gesättigt und in einem verschlossenen Behälter verpackt ist.

## Revendications

**1.** Article comprenant une toile textile et un polymère attirant des particules appliqué sur la toile, l'article ayant un coefficient d'attraction de particules de 50% ou plus pour des particules de noir de carbone, et un comptage de particules supérieur à 0,5 micron de 75 millions de particules par mètre carré ou moins tel que mesuré par le test d'agitation biaxiale selon IES-RP-CC004.2, §5.2.

**2.** Article selon la revendication 1 ayant de 0,01 à 6% en poids de polymère par rapport au poids de la toile.

**3.** Article selon la revendication 1 ou 2 dans lequel la toile est une fibre polyester tissée ou tricotée et présente un poids de 2 à 9 onces par yard carré (de 67.8 à 305.2 g/m$^2$).

**4.** Article selon l'une quelconque des revendications 1 à 3 ayant un coefficient d'attraction de particules de 100% ou plus pour le noir de carbone.

**5.** Article selon l'une quelconque des revendications 1 à 4 dans lequel le polymère a une moyenne en nombre du poids moléculaire de 25 000 à 1 000 000 et le polymère a une pluralité de groupes pendants choisis parmi les groupes hydroxy, hydroxyalkyle et carboxy.

**6.** Article selon l'une quelconque des revendications 1 à 5 dans lequel l'article est saturé avec un solvant et conditionné dans un récipient scellé.

**7.** Article selon l'une quelconque des revendications 1 à 6 ayant un comptage de particules supérieur à 0,5 micron de 30 millions de particules par mètre carré ou moins et un pouvoir absorbant extrinsèque de 3,5 millilitres/mètre carré ou plus.

**8.** Article selon la revendication 1 dans lequel le polymère est un polymère soluble dans l'eau choisi parmi

(i) les polysaccharides ayant une pluralité de groupes pendants choisis parmi les groupes hydroxy, hydroxyalkyle et carboxy ; et
(ii) les polymères formés par polymérisation vinyle, ayant une pluralité de groupes pendants choisis parmi les groupes hydroxy, hydroxyalkyle, carboxy, amino et alkylamino.

9. Article selon la revendication 8 dans lequel le polymère a une moyenne en nombre du poids moléculaire de 25 000 à 1 000 000.

10. Article selon la revendication 9 ayant de 0,02 à 3% en poids de polymère par rapport au poids de la toile.

11. Article selon la revendication 9 dans lequel le polymère est choisi parmi les éthers de cellulose, les copolymères de poly(alcool de vinyle) et d'alcool de vinyle.

12. Article selon la revendication 11 dans lequel l'article est saturé avec un solvant et conditionné dans un récipient scellé.

13. Article selon la revendication 11 ayant un coefficient d'attraction de particules de 100% ou plus pour le noir de carbone et un comptage de particules supérieur à 0,5 micron de 30 millions de particules par mètre carré ou moins.

14. Frotteur comprenant une toile textile et un polymère attirant des particules appliqué sur la toile, dans lequel le polymère est choisi parmi (i) les éthers de cellulose ; (ii) les esters de celluloses inorganiques ; (iii) le chitosane ; (iv) les gommes de guar et les dérivés substitués hydroxy, hydroxyalkyle et carboxy de celles-ci ; (v) l'amidon et les dérivés substitués hydroxy, hydroxyalkyle et carboxy de celui-ci ; (vi) les poly(alcool vinylique) et les copolymères d'alcool polyvinylique; (vii) le poly(pyrrolidone de vinyle) ; (viii) le poly(acrylate d'hydroalkyle) et le poly(méthacrylate d'hydroxyalkyle) et (ix) les poly(alkylacrylamide) et les copolymères de poly(alkylacrylamide) ;
dans lequel l'article a un comptage de particules supérieur à 0,5 micron de 75 millions de particules par mètre carré ou moins tel que mesuré par le test d'agitation biaxiale IES-RP-CC004.2.

15. Frotteur selon la revendication 14 ayant de 0,05 à 1% en poids de polymère par rapport au poids de la toile.

16. Frotteur selon la revendication 14 ayant un rapport d'attraction de particules de 100% ou plus pour le noir de carbone.

17. Frotteur selon la revendication 16 dans lequel la toile est une fibre polyester tissée ou tricotée et a un poids de 2 à 9 onces par yard carré (de 67.8 à 305.2 g/m$^2$).

18. Frotteur selon la revendication 14 dans lequel le polymère est choisi parmi les éthers de cellulose, les poly(alcool vinylique) et les copolymères d'alcool vinylique.

19. Frotteur selon la revendication 18 ayant de 0,02 à 3% en poids de polymère par rapport au poids de la toile et un coefficient d'attraction de particules de 50% ou plus pour le noir de carbone.

20. Frotteur selon la revendication 19 ayant un comptage de particules supérieur à 0,5 micron de 30 millions de particules par mètre carré ou moins et un pouvoir absorbant extrinsèque de 3,5 millilitres/mètre carré ou plus.

21. Frotteur selon la revendication 14 dans lequel l'article comprend en outre un résidu tensioactif dans l'intervalle de 0,1 ppm à 0,5% en poids.

22. Article selon la revendication 1 dans lequel l'article comprend en outre un résidu tensioactif choisi parmi des agents tensioactifs anioniques et nonioniques, dans l'intervalle de 0,5 ppm à 0,1% en poids.

23. Article selon la revendication 8 dans lequel l'article comprend en outre un résidu tensioactif dans l'intervalle de 0,1 ppm à 0,5% en poids.

24. Article comprenant une toile textile et un polymère attirant des particules appliqué sur la toile, l'article ayant un coefficient d'attraction de particules de 50% ou plus pour des particules de noir de carbone, et un comptage de particules supérieur à 5 microns de 1 million de particules par mètre carré ou moins tel que mesuré par le test d'agitation biaxiale selon IES-RP-CC004.2, et l'article est conditionné dans un récipient scellé et n'a pas été lavé après que le polymère attirant des particules ait été appliqué sur la toile.

25. Article selon la revendication 24 ayant un coefficient d'attraction de particules de 100% ou plus pour le noir de carbone.

**26.** Article selon la revendication 24 dans lequel le polymère a une moyenne en nombre du poids moléculaire de 25 000 à 1 000 000 et le polymère a une pluralité de groupes pendants choisis parmi les groupes hydroxy, hydroxyalkyle et carboxy.

**27.** Article selon la revendication 24 dans lequel l'article a un comptage de particules supérieur à 5 microns de 300 000 particules par mètre carré ou moins.

**28.** Article selon la revendication 27 dans lequel le polymère attirant des particules est soluble dans l'eau et est choisi parmi

    (i) les polysaccharides ayant une pluralité de groupes pendants choisis les groupes hydroxy, hydroxyalkyle et carboxy ; et
    (ii) les polymères formés par polymérisation vinyle, ayant une pluralité de groupes pendants choisis parmi les groupes hydroxy, hydroxyalkyle, carboxy, amino et alkylamino.

**29.** Article selon la revendication 24 dans lequel l'article a un comptage de particules supérieur à 5 microns de 150 000 particules par mètre carré.

**30.** Article selon la revendication 29 dans lequel le polymère attirant des particules est choisi parmi (i) les éthers de cellulose; (ii) les esters de cellulose inorganiques ; (iii) le chitosane ; (iv) les gommes de guar et les dérivés substitués hydroxy, hydroxyalkyle et carboxy de celles-ci; (v) l'amidon et des dérivés substitués hydroxy, hydroxyalkyle et carboxy de celui-ci ; (vi) les poly(alcool vinylique) et les copolymères d'alcool vinylique ; (vii) le poly(pyrrolidone de vinyle) ; (viii) le poly(acrylate d'hydroalkyle) et le poly(méthacrylate d'hydroxyalkyle) et (ix) les poly(alkylacrylamide) et les copolymères de poly(alkylacrylamide).

**31.** Article selon la revendication 24 dans lequel l'article est saturé avec un solvant et conditionné dans un récipient scellé.